# EUROPÄISCHE PATENTANMELDUNG

(11) **EP 3 375 668 A1**
(43) Veröffentlichungstag der Anmeldung: **19.09.2018**
(21) Anmeldenummer: 18162179.8
(22) Anmeldetag: 16.03.2018
(51) Int. Cl.: B60R 11/06, B62D 63/08, B60R 15/00, B60R 9/06

(54) **BEHÄLTER**

(30) Priorität: 17.03.2017 DE 202017101559 U
(71) Anmelder: Alois Kober GmbH, 89359 Kötz (DE)
(72) Erfinder: Stötter, Stephan, 86479 Aichen (DE)
(74) Vertreter: Ernicke, Moritz

(57) **Zusammenfassung**

Die Erfindung betrifft einen Behälter (2) für ein Fahrzeug (1), insbesondere einen Fahrzeuganhänger, wobei der Behälter (2) einen schalenförmigen Korpus (15) mit einem bevorzugt geschlossenen Boden (21) aufweist. Der profilierte Boden (21) weist quer zueinander ausgerichtete, einbauchende Bodenwölbungen (27,28,29,30) auf, die zueinander kreuzweise ausgerichtete und bevorzugt einander kreuzende Quer- und Längskanäle (31,32) bilden.

## Beschreibung

Die Erfindung betrifft einen Behälter für ein Fahrzeug, insbesondere einen Fahrzeuganhänger, mit den Merkmalen im Oberbegriff des Hauptanspruchs.

Aus der Praxis sind Behälter mit einem schalenförmigen Korpus und mit einem geschlossenen Boden bekannt, die z.B. als Frischwassertanks ausgebildet sind und an einem Fahrzeug, insbesondere einem Fahrzeuganhänger, im Chassisbereich angeordnet werden.

Es ist Aufgabe der vorliegenden Erfindung, einen verbesserten Behälter und dessen Anordnung aufzuzeigen.

Die Erfindung löst diese Aufgabe mit den Merkmalen im Hauptanspruch.

Die beanspruchte Ausbildung des profilierten Behälterbodens mit quer bzw. kreuzweise zueinander ausgerichteten und nach innen in den Behälter einbauchenden Bodenwölbungen, die einander kreuzende und nach unten offene Quer- und Längskanäle bilden können, haben verschiedene Vorteile.

Die Bodenausbildung ermöglicht die Anordnung des Behälters in einem Bereich der Fahrzeugachsen eines Fahrzeugs, insbesondere eines Fahrzeuganhängers. Hierbei kann der Behälter platzsparend im Innenbereich des Chassis und dabei im oder am Achsbereich untergebracht werden. Der Behälter kann am Deckel oder seiner Oberseite bündig mit der Chassisoberseite abschließen. Andere Innenbereiche des Chassis können dann für andere Einbauten am Fahrzeug genutzt werden. Der Behälter kann auch für eine zusätzliche Abstützung eines Fahrzeugaufbaus sorgen.

Die jeweils einzeln oder mehrfach vorhandenen Quer- und Längskanäle können genutzt werden, um hier Fahrzeugteile, insbesondere einen Achskörper und/oder Teile der Bremseinrichtung, insbesondere eine Schlingerbremseinheit, platzsparend aufzunehmen. Der Behälter kann eine optimierte Höhe und ein nach den Platzverhältnissen optimiertes Aufnahmevolumen haben. Bei einer Tandemachse kann der Behälter wahlweise auf dem ersten oder zweiten Achskörper angeordnet werden. Die Bodenprofilierung kann universell sein und verschiedene wählbare sowie ggf. wechselbare Behälteranordnungen in oder am Achsbereich des Fahrzeugs ermöglichen.

In einem eigenständigen Erfindungsgedanken ist vorgesehen, dass ein Behälter für ein Fahrzeug, insbesondere einen Fahrzeuganhänger, einen schalenförmigen Korpus mit einem bevorzugt geschlossenen Boden aufweist und ferner ein Stützmittel aufweist, das zur Aufnahme und Abstützung, ggf. auch zur Befestigung, des Behälters an einer Fahrzeugachse, insbesondere einem Achskörper, vorgesehen und geeignet ist. Eine solche Abstützungs- und ggf. Befestigungsmöglichkeit entbindet von der Notwendigkeit einer Behälterbefestigung an Längsträgern und/oder Querträgern des Chassis. Eine solche Behälterbefestigung kann gleichwohl vorhanden sein. Der Behälter kann andererseits an seiner Oberseite, insbesondere an einem umlaufenden Randflansch seines Korpus, am Boden eines Fahrzeugaufbaus befestigt werden. Der Behälter kann mit seinem Innenraum, insbesondere seinen ein oder mehreren Kammern, von oben her und von einem Fahrzeugaufbau her zugänglich sein.

Der Behälter kann in seinem Innenraum beliebige Güter oder Stoffe in beliebiger Zahl und Kombination temporär oder dauerhaft aufnehmen. Dies können auch Einbauten, z.B. eine Pumpe, Heizung, Sensorik oder dgl. sein. Der Innenraum kann als einzelner zusammenhängender Raum ausgebildet oder in mehrere Bereiche unterteilt sein.

Der Behälter kann mehrere, insbesondere zwei, separate Kammern aufweisen. Eine Bodenwölbung kann eine Mehrfachfunktion haben und kann auch zur gegenseitigen Trennung und Abschottung von Kammern genutzt werden. Die Bodenwölbungen erhöhen die mechanische Stabilität des Behälters. Dieser kann einen einteiligen Korpus aufweisen und kann die mehreren Kammern aufnehmen.

Der Behälter kann aus einem beliebig geeigneten Material bestehen. Vorzugsweise besteht er aus Kunststoff. Er kann dabei auf beliebig geeignete Weise hergestellt werden, z.B. durch ein Kunststoff-Tiefziehverfahren, insbesondere durch das Twin-Sheet-Verfahren. Hierbei können z.B. beide Kammern bzw. Tanks gleichzeitig hergestellt werden. Alternativ ist eine Herstellung durch Extrusionsblasformen oder ein Rotationsschmelzverfahren oder dgl. möglich.

In einem weiteren selbstständigen Erfindungsgedanken ist vorgesehen, dass ein Behälter für ein Fahrzeug, insbesondere einen Fahrzeuganhänger, einen schalenförmigen Korpus mit einem bevorzugt geschlossenen Boden aufweist und aus einem antibakteriellen Material besteht. Vorzugsweise ist dies ein antibakterieller Kunststoff. Alternativ kann eine antibakterielle Beschichtung vorhanden sein. Das antibakterielle Material ist vor allem für eine zumindest bereichsweise Ausbildung des Behälters als Tank für verderbliche Inhalte, insbesondere für Frischwasser, günstig. Das antibakterielle Material kann bereichsweise am Behälter vorhanden sein.

Die Behälterabmessungen, insbesondere die Außenabmessungen seiner Kammern, können an die Platzverhältnisse des Fahrzeugs im oder am Achsbereich angepasst sein. Insbesondere lässt sich dadurch ein Behälterbereich, vorzugsweise eine Kammer, in einem Freiraum zwischen den Achskörpern einer Tandemachse unterbringen. Andererseits kann der Behälter durch eine entsprechende Formgebung seines Bodens unterschiedliche Montagemöglichkeiten am Fahrzeug eröffnen. Er kann z.B. wahlweise bei einer Einzelachse oder einer Tandemachse angeordnet werden. Bei einer Tandemachse kann er wahlweise auf dem ersten Achskörper oder dem zweiten Achskörper angeordnet werden. Ferner ist eine Montage an anderer Stelle, insbesondere in Fahrtrichtung hinter der Einzel- oder Tandemachse möglich.

Der Behälter ist besonders für Fahrzeuganhänger mit einer starren Deichsel nebst Anhängerkupplung und einer oder mehreren Fahrzeugachsen, insbesondere gefederter Radlenkerachse, geeignet. Der Querkanal am Behälterboden kann an verschiedene Achsformen adaptiert sein, z.B. eine Längslenker- oder Schräglenkerachse. Der Behälter ist andererseits auch für ein Fahrzeug mit einem Frontantrieb und einer hinteren Achsanordnung ohne eigenen Fahrantrieb geeignet. Das Chassis kann dabei als Anbauchassis mit Achsanordnung für die Montage an einem Zugkopf ausgebildet sein. Derartige Fahrzeuge können als Wohnmobile, Verkaufsfahrzeuge, Präsentationsfahrzeuge oder dgl. ausgebildet sein.

Ein besonderer Vorteil ist die Möglichkeit zur kompletten und montagefertigen Vorkonfektionierung des Behälters. Dieser braucht vom Kunden nur noch eingebaut zu werden. Mit dem angebauten Stützmittel kann der Behälter auf einen Achskörper aufgesetzt werden. Im einfachsten Fall wird er dann nur noch mit dem Boden des Fahrzeugaufbaus verschraubt oder auf andere Weise, ggf. auch am Chassis, befestigt.

In den Unteransprüchen sind weitere vorteilhafte Ausgestaltungen der Erfindung angegeben.

Der beanspruchte Behälter und das beanspruchte Fahrzeug können ferner folgende vorteilhafte Ausgestaltungen aufweisen, die einzeln oder in beliebiger Kombination benutzt werden können.

Der Behälter kann im Innenraum seines schalenförmigen Korpus mehrere, insbesondere zwei, separate Kammern aufweisen.

Die Außenabmessungen der Kammern können auf einen Freiraum zwischen zwei Achskörpern einer Tandemachse des Fahrzeugs angepasst sein.

Eine Kammer kann als Tank für ein Fluid, insbesondere als Frischwassertank, ausgebildet sein.

Eine andere Kammer kann ebenfalls als Tank für ein Fluid ausgebildet sein. Eine andere Kammer kann auch Einbauten oder Aggregate für einen Fahrzeugaufbau aufnehmen, z.B. eine Pumpe, Heizung, Sensorik. Eine andere Kammer kann auch ein Stauraum sein.

Der Boden mit den Quer- und Längskanälen kann eine Form aufweisen, die zur Aufnahme eines Achskörpers einer Fahrzeugachse und eines Teils einer Bremseinrichtung des Fahrzeugs, insbesondere einer Schlingerbremseinheit, adaptiert ist.

Eine Bodenwölbung kann sich quer über den Boden des Behälters erstrecken und einen an den Stirnseiten offenen Querkanal bilden.

Die quer gerichtete Bodenwölbung kann eine zur Aufnahme eines Achskörpers der Achse geeignete Form aufweisen.

Die quer gerichtete Bodenwölbung kann in der Unteransicht eine K-Form mit einer zur Vorderseite weisenden, abgewinkelten Vorderwand aufweist.

Die quer gerichtete Bodenwölbung kann im mittleren Bereich des Behälters angeordnet sein.

Eine erste längs gerichtete und an beiden Stirnseiten offene Bodenwölbung kann zwischen einer quer gerichteten Bodenwölbung und der Vorderseite des Behälters angeordnet sein.

Die erste längs gerichtete Bodenwölbung kann eine zur Aufnahme eines Teils einer Bremseinrichtung des Fahrzeugs, insbesondere einer Schlingerbremseinheit, geeignete Form aufweisen.

Eine zweite längs gerichtete und an beiden Stirnseiten offene Bodenwölbung kann zwischen der ersten längs gerichteten Bodenwölbung und der quer gerichteten Bodenwölbung angeordnet sein.

Die zweite längs gerichtete Bodenwölbung kann eine geringere Weite und Höhe als die erste längs gerichtete Bodenwölbung aufweisen.

Eine dritte längs gerichtete und nur an einer Stirnseite offene Bodenwölbung kann zwischen der quer gerichteten Bodenwölbung und der Rückseite des Behälters angeordnet sein.

Die dritte längs gerichtete Bodenwölbung kann eine zur Aufnahme eines Teils einer Bremseinrichtung des Fahrzeugs, insbesondere einer Schlingerbremseinheit, geeignete Form aufweisen.

Die drei längs gerichteten Bodenwölbungen können zusammen einen Längskanal bilden, der sich von der Vorderseite des Behälters durch den Querkanal erstreckt und mit Abstand vor der Rückseite des Behälters endet.

Der Behälter kann ein Stützmittel aufweisen, das zur Aufnahme und Abstützung des Behälter an einer Fahrzeugachse, insbesondere einem Achskörper, vorgesehen und geeignet ist. Das Stützmittel kann eine Stützschiene am seitlichen Korpusrand und einen hiervon nach unten abstehenden Stützarm aufweisen.

Der Stützarm kann in den Mündungsbereich eines Querkanals am Boden des Behälters reichen.

Der Stützarm kann am freien Ende eine an einen Achskörper einer Fahrzeugachse angepasste Kontur aufweisen.

Das Stützmittel kann im Kreuzungsbereich von Quer- und Längskanal am Boden des Behälters einen Stützbeschlag aufweisen.

Der Behälter kann ein Mittel zur Befestigung am Fahrzeug, insbesondere am Chassis, aufweisen.

Der Behälter kann einen festen oder abnehmbaren, einteiligen oder mehrteiligen Deckel aufweisen. Der Deckel kann im Bereich einer als Tank ausgebildeten Kammer im Behälter eine Armatur mit Zugangsöffnung(en) und einem Sensor, insbesondere einem Füllstandssensor, aufweisen.

Der Behälter kann aus Kunststoff bestehen.

Der Behälter kann eine Wärmeisolierung und/oder eine Klimatisierung, insbesondere Heizung, aufweisen.

Der Behälter kann montagefertig vorkonfektioniert sein.

Das Fahrzeug kann eine Bremseinrichtung und ggf. eine Schlingerbremseinheit aufweisen.

Das Fahrzeug kann ein Chassis mit Längsträgern und eine Deichsel mit einer Anhängerkupplung aufweisen.

Der Behälter kann am Fahrzeug im Bereich der Fahrzeugachse(n) angeordnet sein.

Der Behälter kann am Fahrzeug auf einem Achskörper oder in Fahrtrichtung gesehen hinter einem Achskörper angeordnet sein.

Der Behälter kann am Fahrzeug auf einem Achskörper abgestützt sein.

Der Behälter kann am Fahrzeug mit seitlichem Abstand zum Chassis angeordnet sein.

Die Erfindung ist in den Zeichnungen beispielhaft und schematisch dargestellt. Im Einzelnen zeigen:
- Figur 1:: Eine perspektivische Draufsicht auf ein Fahrzeug mit einem Chassis und einem darin aufgenommenen Behälter in einer ersten Anordnung,
- Figur 2:: eine perspektivische Unteransicht von Figur 1,
- Figur 3:: eine Variante des Fahrzeugs 1 mit einer anderen Anordnung des Behälters in Draufsicht,
- Figur 4:: eine abgebrochene und vergrößerte Schnittansicht gemäß Schnittlinie IV-IV von Figur 3,
- Figur 5:: eine abgebrochene und vergrößerte perspektivische Unteransicht der Behälteranordnung von Figur 3,
- Figur 6:: eine abgebrochene und perspektivische Seitenansicht der Behälteranordnung von Figur 3,
- Figur 7:: eine dritte Variante der Behälteranordnung in Draufsicht,
- Figur 8:: eine perspektivische Draufsicht eines geöffneten Behälters und
- Figur 9 und 10:: verschiedene perspektivische Ansichten der Behälterunterseite.

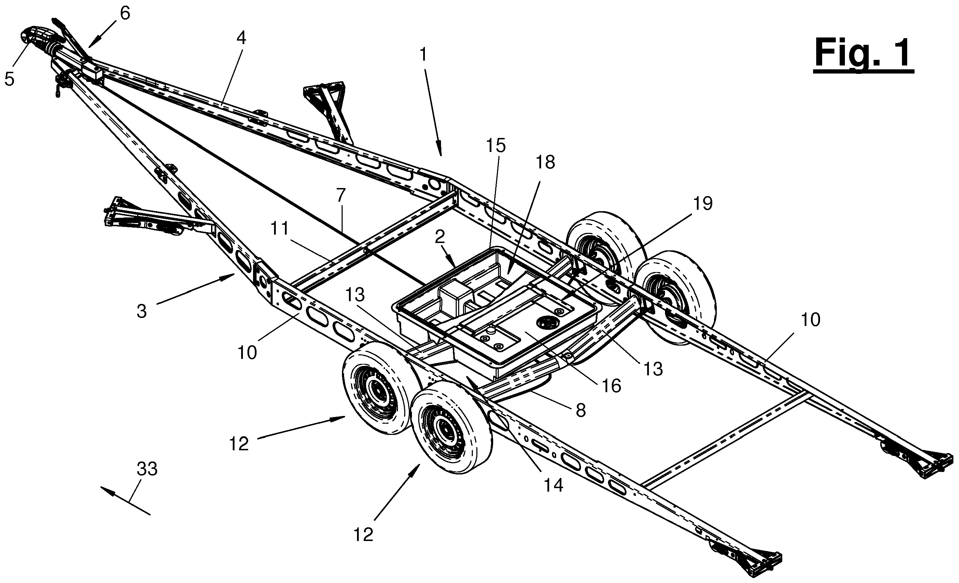

Die Erfindung betrifft einen Behälter (2) für ein Fahrzeug (1). Die Erfindung betrifft ferner ein Fahrzeug (1) mit einem solchen Behälter. Der Behälter (2) kann an das Fahrzeug (1) angepasst sein und kann gemäß Figur 1, 3 und 7 in verschiedenen Positionen am Fahrzeug (1) angeordnet und montiert werden. Die Erfindung betrifft ferner ein Verfahren zur Bereitstellung eines montagefertig vorkonfektionierten Behälters (2).

Figur 1 zeigt das Fahrzeug (1) in der bevorzugten Ausführungsform als Fahrzeuganhänger. Es weist ein Chassis (3) mit einer bevorzugt starren Deichsel (4) und einer Anhängerkupplung (5) am vorderen Deichselende auf. Das Chassis (3) besteht aus zwei parallelen Längsträgern (10), die an das Deichselende in Längsrichtung anschließen. Das Chassis (3) kann ferner einen oder mehrere Querträger (11) aufweisen.

Der gezeigte Fahrzeuganhänger (1) weist zwei Fahrzeugachsen (12) auf, die als Radlenkerachsen ausgebildet sind. Sie weisen jeweils einen quer über das Chassis (3) sich erstreckenden Achskörper (13) mit endseitig schwenkbar angeordneten und gefederten Radlenkern oder Radschwinghebeln auf, welche die Räder tragen. Die Achskörper (13) sind vorzugsweise als hohle Achsrohre ausgebildet, in die beidendig jeweils ein mit dem Radlenker verbundenes Innenrohr mit einem Federelement, z.B. Gummischnüren, einem Torsionsstab oder dgl. eingesteckt ist.

In der gezeigten Ausführungsform sind die Fahrzeugachsen (12) als Schräglenkerachsen ausgebildet, bei denen der Achskörper (13) entgegen der Zugrichtung oder VorwärtsFahrtrichtung (33) mittig abgewinkelt ist. In einer anderen Ausführungsform kann es sich um Längslenkerachsen mit einem geraden Achskörper (13) handeln. In weiterer Abwandlung zu Figur 1 kann eine einzelne Fahrzeugachse (12) oder Einzelachse vorhanden sein.

Der Fahrzeuganhänger (1) weist eine Bremseinrichtung (6) auf. Diese kann eine Betriebsbremse, eine Feststellbremse und ggf. eine Schlingerbremse beinhalten. Die Betriebsbremse ist z.B. als Auflaufbremse ausgebildet, die eine an der Anhängerkupplung (5) angeordnete Auflaufeinrichtung und ein hiervon ausgehendes Bremsgestänge (7) aufweist, das über eine Verteilung mit den zu den Radbremsen führenden Bremszügen (8), vorzugsweise Bodenzügen, verbunden ist. Die Handbremse wirkt ebenfalls auf das Bremsgestänge (7) ein. Alternativ kann das Bremsgestänge als Seilzuganordnung oder in anderer Weise ausgebildet sein.

Die Schlingerbremseinrichtung dient zur Stabilisierung von kritischen und instabilen Fahrzuständen des Fahrzeuganhängers. Sie besitzt eine die instabilen Fahrzustände detektierende Sensorik und eine Schlingerbremseinheit (9), die zu Stabilisierungszwecken mit einem Aktor auf die Bremszüge (8) einwirkt und die Radbremsen geregelt betätigt, bis der Fahrzustand restabilisiert ist. Die Schlingerbremseinheit (9) mit dem Aktor ist an einer Fahrzeugachse (12) und deren Achskörper (13) angeordnet. Dies ist in den gezeigten Ausführungsbeispielen der erste Achskörper (13) der Tandemachse.

Die Achskörper (13) der gezeigten Tandemachse sind in Längs- bzw. Fahrtrichtung (33) voneinander distanziert und bilden zwischen sich einen Freiraum (14). Die Achskörper (13) sind an den Enden über Achsböcke mit den Längsträgern (10) verbunden, insbesondere verschraubt.

Der Behälter (2) ist im Innenbereich des Chassis (3) zwischen den Längsträgern (10) angeordnet. Er kann dabei im Bereich der einen oder mehreren Fahrzeugachse(n) (12) angeordnet sein. Figur 1, 3 und 7 zeigen hierfür verschiedene Varianten der Behälteranordnung. Der Behälter (2) kann dabei auf einem Achskörper (13) oder in Fahrtrichtung (33) gesehen hinter der Einzelachse oder Tandemachse angeordnet sein.

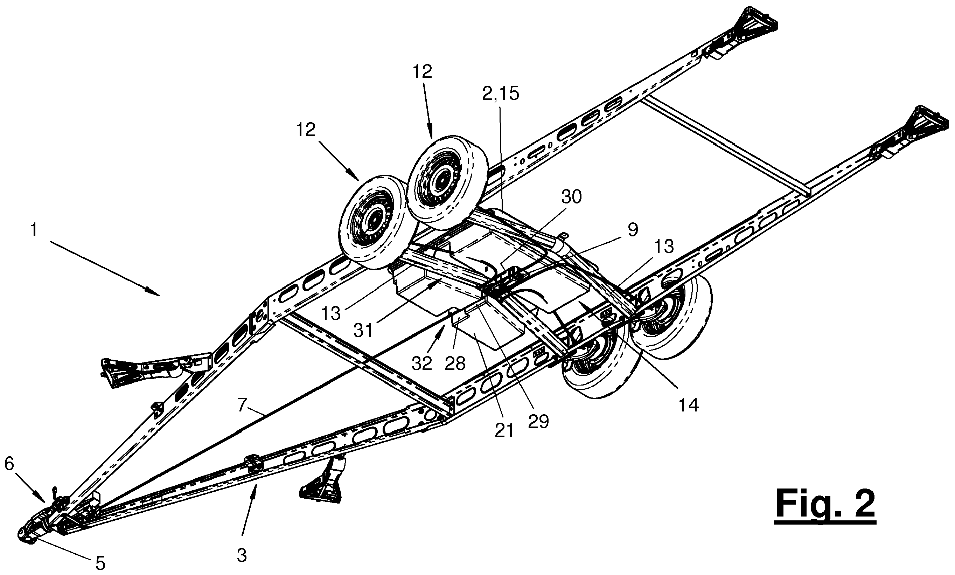

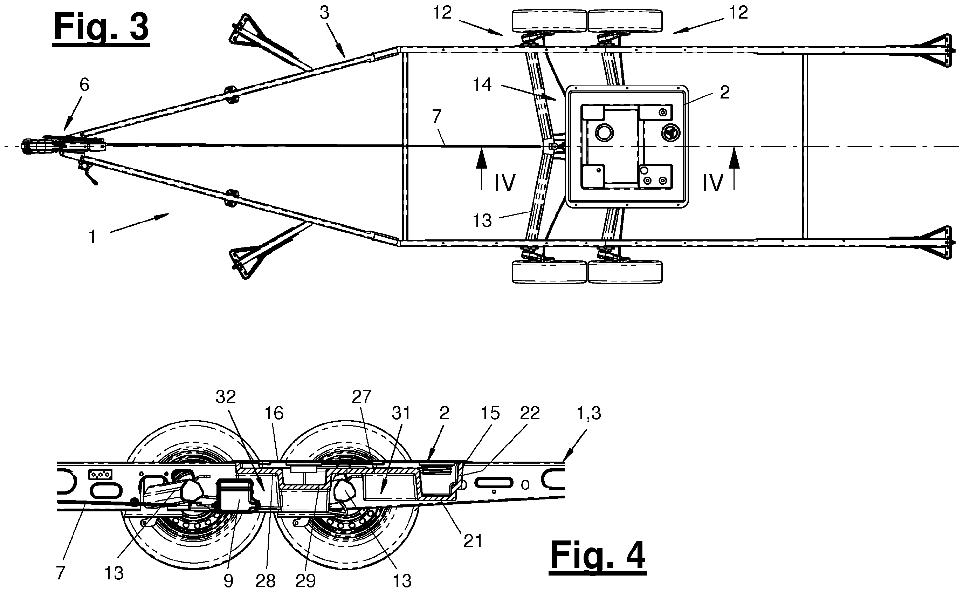

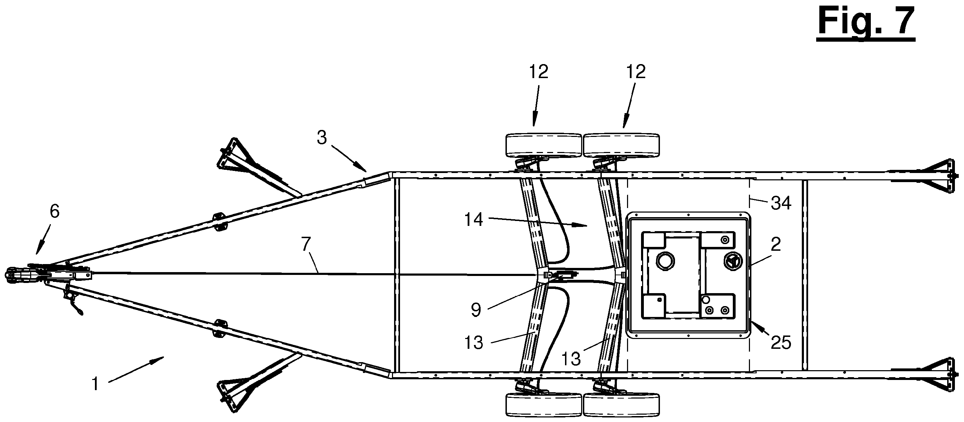

In der ersten Variante von Figur 1 und 2 ist der Behälter (2) auf dem ersten Achskörper (13) der Tandemachse angeordnet. Bei der zweiten Variante von Figur 3 bis 6 ist der Behälter (2) auf dem zweiten Achskörper (13) der Tandemachse angeordnet. Bei der dritten Variante von Figur 7 befindet sich der Behälter (2) hinter der Tandemachse. Bei den ersten beiden Varianten kann der Behälter (2) auf einem Achskörper (13) abgestützt sein.

In den verschiedenen Ausführungsformen ist der Behälter (2) jeweils mit einem seitlichen Abstand zum Chassis (3) und den Längsträgern (10) sowie bevorzugt zentral angeordnet. Wie Figur 4 in einer geschnittenen Queransicht verdeutlicht, ist der Behälter (2) in seiner Höhe auf die Höhe des Chassis (3), insbesondere seiner Längsträger (10), abgestimmt. Er kann dadurch platzsparend und störungsarm sowie ohne Beeinträchtigung der Bodenfreiheit im Innenbereich des Chassis (3) aufgenommen sein.

Der Behälter (2) ist z.B. mit seiner Oberseite auf Höhe der Oberseite oder Oberkante des Chassis (3) bzw. der Längsträger (10) angeordnet. Der Behälter (2) kann dabei direkt an einen nicht dargestellten Fahrzeugaufbau und dessen Unterseite anschließen. Er kann hier auch befestigt und abgestützt sein. Der Behälter (2) kann durch eine Öffnung im Aufbauboden von oben her in der gezeigten Einbau- und Montagelage zugänglich sein.

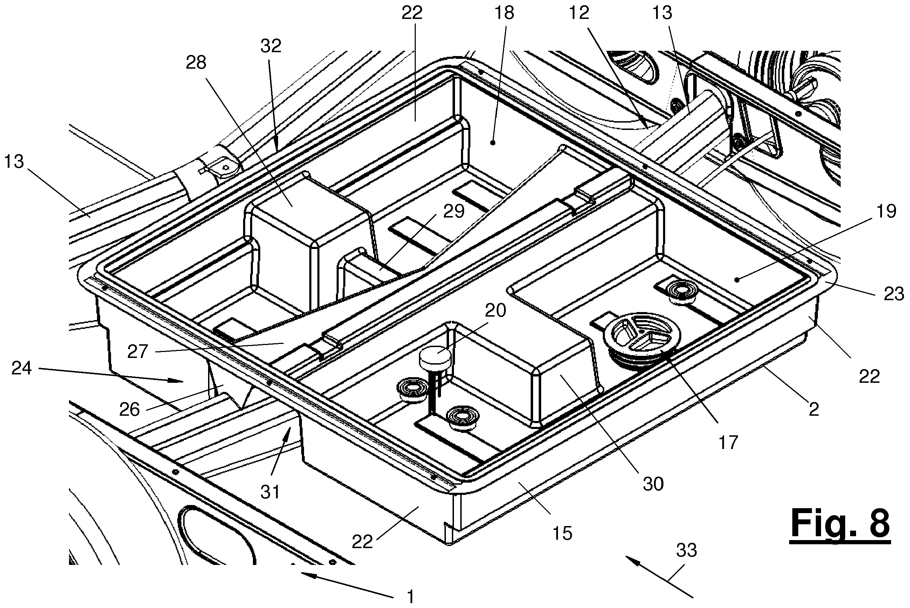

Figur 8, 9 und 10 verdeutlichen die Ausbildung des Behälters (2).

Der Behälter (2) kann eine offene oder geschlossene Behälterform haben. Er weist z.B. einen schalenförmigen und noch oben offenen Korpus (15) mit einem bevorzugt geschlossenen Boden (21) auf. Der bevorzugt geschlossene Boden (21) weist eine im wesentlichen massive und durchgehende Wandung auf, die den Behälterinhalt gegen Spritzwasser oder andere Umwelteinflüsse von unten schützt. Etwaige Durchgangsöffnungen sind mit einem ggf. lösbaren Verschluss verschlossen. Alternativ können freie Durchgangsöffnungen im Boden vorhanden sein.

Der Korpus (15) weist außerdem umlaufende Seitenwände (22) zur Schalenbildung auf. Er hat einen oberen Korpusrand (23) der flanschartig oder kragenartig nach außen abgewinkelt ist. Der Korpus (15) weist einen hohlen Innenraum auf und kann an seiner bevorzugt oben liegenden Öffnung mit einem Deckel (16) fest oder lösbar verschlossen werden. Der Deckel (16) kann einteilig oder mehrteilig sein. Der Deckel kann die Öffnung des Korpus (15) vollständig oder teilweise abdecken. Er kann z.B. eine Aussparung aufweisen. Der Deckel kann auch entfallen.

Der Korpus (15) kann in einer anderen Ausführung kastenartige ausgebildet und eine seitliche Öffnung aufweisen. Er kann auch bis auf kleine Zugangsöffnungen allseitig geschlossen sein.

Der Behälter (2) kann ferner eine Wärmeinsolierung aufweisen. Dies kann auf unterschiedliche Weise erreicht werden, z.B. durch eine Isolierschicht auf oder in der Behälterwandung, insbesondere Korpuswandung, eine mehrlagige Behälterwandung mit interner Isolierung, z.B. einer inneren Luftschicht, eine Behälterwandung aus einem wärmeisolierenden, z.B. geschäumten Material oder dgl. Figur 4 deutet eine mehrlagige Wandausbildung an mit einer inneren funktionalen, z.B. tragenden oder korrosionsfesten, Behälterwandung und einer zumindest bereichsweise außenseitig angeordneten Isolationswanne. Die Anordnung kann auch umgekehrt sein. Die Wärmeinsolierung kann an der gesamten Behälter- oder Korpuswandung oder bereichsweise vorhanden sein. Sie kann z.B. dem Frostschutz eines Wassertanks oder dgl. dienen.

Der Behälter (2) kann auch eine Klimatisierung aufweisen. Dies kann z.B. eine Heizung und/oder Kühlung sein. Die Klimatisierung kann an der Behälter- oder Korpuswandung, z.B. als Heiz- oder Kühlmatte, und/oder im Innenraum des Behälters (2) angeordnet sein. Sie kann ebenfalls dem Frostschutz oder anderen Zwecken dienen.

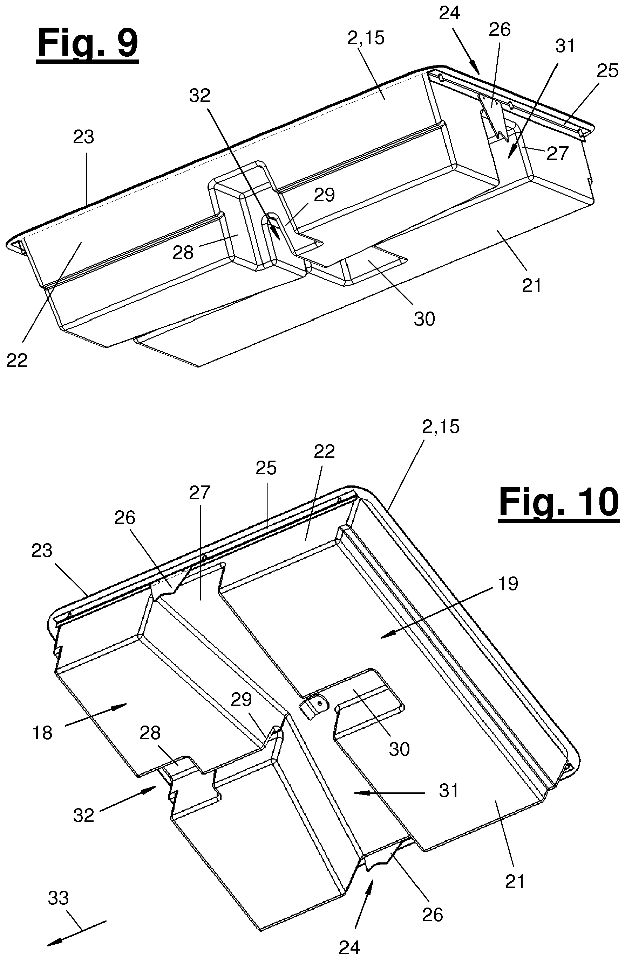

Der bevorzugt geschlossene Boden (21) ist profiliert. Er weist gemäß Figur 9 und 10 mehrere einbauchende Bodenwölbungen (27,28,29,30) auf. Diese sind zum Innenraum bzw. nach oben gewölbt und haben einen U-förmigen Querschnitt. Sie sind nach unten offen. Die Bodenwölbungen (27,28,29,30) sind quer bzw. kreuzweise zueinander ausgerichtet. Sie können einander kreuzende Quer- und Längskanäle (31,32) bilden.

Im gezeigten Ausführungsbeispiel sind ein Querkanal (31) und ein Längskanal (32) vorhanden, die einander kreuzen und schneiden. In einer anderen Ausführungsform ist eine Mehrfachanordnung von Quer- und/oder Längskanälen möglich. Ferner können ein Querkanal (31) und ein Längskanal (32) kreuzweise ausgerichtet sein, wobei sie voneinander distanziert sind und einander nicht schneiden bzw. kreuzen.

Der Querkanal (27) erstreckt sich quer zur Längsachse oder Fahrtrichtung (33) des Fahrzeugs (1). Der Längskanal (32) ist längs dieser Achse (33) ausgerichtet. Die Kanäle (31, 32) sind in Längs- und Querrichtung gesehen jeweils im mittleren Bereich des Behälters (2) bzw. Bodens (21) angeordnet.

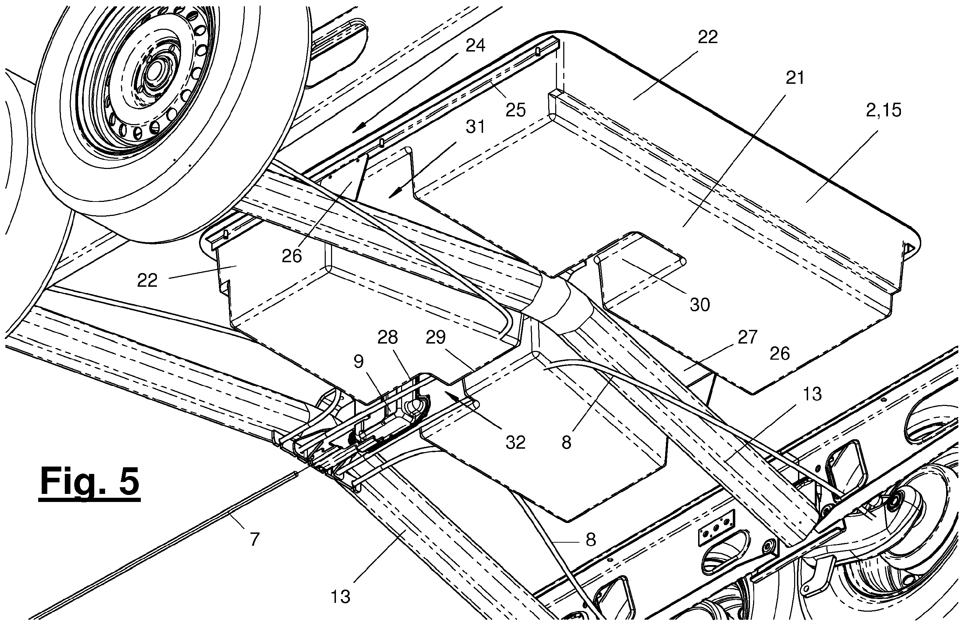

Der Boden (21) mit den Quer- und Längskanälen (31,32) weist eine Form auf, die zur Aufnahme eines Achskörpers (13) einer Fahrzeugachse (12) und eines Teils einer Bremseinrichtung (6) des Fahrzeugs (1), insbesondere der Schlingerbremseinheit (9), geeignet und vorzugsweise auch adaptiert ist. Der Behälter (2) kann auf den Achskörper (13) und den Teil der Bremseinrichtung (6) aufgesetzt werden, wobei diese in den Quer- und Längskanälen (31,32) bzw. in den nach unten offenen Bodenwölbungen (27,28,29,30) eintauchen und hier aufgenommen werden. Figur 5 zeigt diese Anordnung bei der zweiten Variante mit der Behälteranordnung auf dem zweiten Achskörper (13).

Der Querkanal (31) und der Längskanal (32) schneiden einander unter Bildung von Kanalöffnungen an der Schnittstelle. Der Querkanal (31) erstreckt sich über die gesamte Breite des Behälters (2) und ist an den Stirnseiten offen. Er ist in der nachfolgend erläuterten Weise zur Aufnahme eines Achskörpers (13) ausgebildet.

Der Längskanal (32) erstreckt sich von der Vorderseite des Behälters (2) durch den Querkanal (31) hindurch und ein Stück darüber hinaus. Der Längskanal (32) endet mit Abstand vor der Rückseite des Behälters (2). Er hat eine offene und eine geschlossene Stirnseite. Der Längskanal (32) ist zur Aufnahme von Teilen der Bremseinrichtung (6) geeignet, insbesondere der Schlingerbremseinheit (9) und ggf. des Bremsgestänges (7). Er kann vor dem Querkanal (31) eine Verengung aufweisen.

Die Bodenwölbungen (27,28,29,30) haben jeweils im Querschnitt eine im Wesentlichen rechteckige Formgebung und sind an der Unterseite offen. Die eine Bodenwölbung (27) erstreckt sich quer über den Boden (21) und ist an beiden Stirnseiten offen. Sie bildet den Querkanal (31). Sie hat eine zur Aufnahme eines Achskörpers (13) geeignete Form.

In der gezeigten Ausführung hat die Bodenwölbung (27) in der Unteransicht eine K-Form. Sie besitzt eine gerade und quer zur Längsachse (33) verlaufende Rückwand, die zur Behälterrückseite weist und den aufrechten K-Schenkel bildet. Andererseits hat sie eine zur Behältervorderseite weisende abgewinkelte Vorderwand, die die schrägen K-Schenkel bildet. Durch die K-Form kann die Bodenwölbung (27) bzw. der Querkanal (31) wahlweise einen geraden Achskörper (13) einer Längslenkerachse oder einen abgewinkelten Achskörper (13) der gezeigten Schräglenkerachse aufnehmen. Durch die K-Form ist die Weite des Querkanals (31) in der Mitte am kleinsten und vergrößert sich jeweils zu den Seitenrändern hin. Die quer gerichtete Bodenwölbung (27) bzw. der Querkanal (31) ist im mittleren Bereich des Behälters (2) (gesehen in Längsrichtung (33)) angeordnet.

Alternativ kann die Bodenwölbung (27) bzw. der Querkanal (31) eine andere Form, z.B. als gerader Kanal oder mit anderer Kontur, aufweisen. Ein gerader Kanal ist für eine Längslenkerachse geeignet. Die Querschnittsform kann ebenfalls eine andere Formgebung, z.B. gerundet, haben.

Gemäß Figur 9 und 10 kann der Längskanal (32) von mehreren Bodenwölbungen (28,29,30) gebildet werden. Eine erste längs gerichtete Bodenwölbung (28) ist an beiden Stirnseiten offen. Sie ist zwischen der Vorderseite des Behälters (2) und der quer gerichteten Bodenwölbung (27) angeordnet. Bei der gezeigten Ausführungsform ist eine zweite längs gerichtete und an beiden Stirnseiten offene Bodenwölbung (29) zwischen der ersten Bodenwölbung (28) und der quer gerichteten Bodenwölbung (27) angeordnet. Die zweite Bodenwölbung (29) hat eine geringere Weite und Höhe als die erste Bodenwölbung (28) und bildet die vorgenannte Verengung. Die zweite Bodenwölbung (29) mündet mit ihrer Öffnung an der quergerichteten Bodenwölbung (27) bzw. am Querkanal (31). In einer anderen und nicht dargestellten Ausführungsform kann die zweite Bodenwölbung (29) entfallen, wobei die erste Bodenwölbung (28) eine größere Länge hat und am Querkanal (31) bzw. der Bodenwölbung (27) münden.

In den gezeigten Ausführungsbeispielen ist außerdem eine dritte längsgerichtete und nur an einer Stirnseite offene Bodenwölbung (30) vorgesehen, die zwischen der quergerichteten Bodenwölbung (27) und der Rückseite des Behälters (2) angeordnet ist. Die offene Stirnseite weist zur Bodenwölbung (27) bzw. zum Querkanal (31) und mündet dort. Die geschlossene Rückwand der dritten Bodenwölbung (30) ist mit Abstand von der Rückseite des Behälters (2) angeordnet. In einer Abwandlung der gezeigten Ausführungsform kann die dritte Bodenwölbung (30) entfallen, so dass der Längskanal (32) und die ein oder zwei Bodenwölbungen (28,29) am Querkanal (31) oder mit Abstand davor enden.

Die erste und die dritte längs gerichtete Bodenwölbung (28, 30) haben eine zur Aufnahme eines Teils der Bremseinrichtung (6) geeignete und bevorzugt adaptierte Form. Insbesondere können sie die Schlingerbremseinheit (9) aufnehmen. Figur 2 und 5 zeigen diese Anordnung. Die Bodenwölbungen (28,30) haben hierfür eine geeignete Weite und Tiefe.

Die zweite längs gerichtete Bodenwölbung (29) kann eine geringere Weite und Höhe als die erste längs gerichtete Bodenwölbung (28) aufweisen. Sie kann eine zur Aufnahme eines Teils der Bremseinrichtung (6), insbesondere des Bremsgestänges (7), geeignete Form haben. Figur 2 verdeutlicht diese Situation bei Montage des Behälters (2) auf dem ersten Achskörper (13). Das Bremsgestänge (7) kann dadurch bis zu der in der dritten Bodenwölbung (30) aufgenommene Schlingerbremseinheit (9) geführt werden.

In der gezeigten und bevorzugten Ausführungsform des Quer- und Längskanals (31,32) und der Bodenwölbungen (27,28,29,30) ist der Behälter (2) geeignet, in den vorerwähnten verschiedenen Positionen im Achsbereich montiert zu werden. Außerdem können die Außenabmessungen des Behälters (2) derart abgestimmt werden, dass er bei Anordnung auf einem Achskörper (13) zumindest bereichsweise im Freiraum (14) zwischen den Achskörpern (13) einer Tandemachse aufgenommen werden kann.

Figur 1 und 2 zeigen die besagte erste Position mit Anordnung des Behälters (2) auf dem ersten Achskörper (13) der Tandemachse. Der Achskörper (13) ist im Querkanal (31) aufgenommen, wobei die Schlingerbremseinheit (9) am Ende des Längskanals (32) und in der dritten Bodenwölbung (30) aufgenommen ist. Der Bremszug (7) erstreckt sich durch den vorderen Bereich des Längskanals (32) bzw. die erste und zweite Bodenwölbung (28,29).

Figur 3 bis 6 zeigen die zweite Variante, bei der der Behälter (2) auf dem zweiten Achskörper (13) der Tandemachse angeordnet ist und diesen in seinem Querkanal (31) aufnimmt. In diesem Fall bleibt der hintere Bereich des Längskanals (32) ungenutzt, wobei die Schlingerbremseinheit (9) im Anfangsbereich des Längskanal (32) und in der ersten längsgerichteten Bodenwölbung (28) aufgenommen ist. Sie kann dort teilweise von vorn hineinragen.

Bei der dritten Variante von Figur 7 ist der Behälter (2) hinter den beiden Achskörpern (13) der Tandemachse angeordnet. In diesem Fall werden keine Achs- oder Bremsteile im Quer- und Längskanal (31,32) aufgenommen.

Die vorbeschriebene profilierte Ausbildung des Bodens (21) mit den Bodenwölbungen (27,28,29,30) und der Kanalbildung bildet ein Universalprofil, welches eine freie Wahl unter den vorgenannten Anordnungsmöglichkeiten offen lässt.

In einer anderen und nicht dargestellten Ausführungsform kann das Bodenprofil an eine bestimmte Behälteranordnung adaptiert sein. Für eine vorgegebene Behälteranordnung auf dem zweiten Achskörper (13) der Tandemachse kann z.B. der Längskanal (32) verkürzt sein und mit seinem geschlossenen Kanalende sowie mit Abstand vor dem Querkanal (31) angeordnet sein. Die längs gerichteten zweiten und dritten Bodenwölbungen (29,30) können in diesem Fall entbehrlich sein. Die allein noch vorhandene erste Bodenwölbung (28) kann nur an der vorderen Stirnseite offen und rückseitig geschlossen sein.

Wenn der Behälter (2) für eine einzelne Fahrzeugachse (12) vorgesehen ist, kann in Abwandlung der gezeigten Ausführungsform die erste und erweiterte Bodenwölbung (28) entfallen, wobei die zweite Bodenwölbung (29) bis zur Behältervorderseite verlängert ist und dem Bremszug (8) des Bremsgestänge (7) aufnimmt.

In den vorbeschriebenen Ausführungsformen beziehen sich die Begriffe Vorderseite und Rückseite des Behälters (2) jeweils auf die Fahrtrichtung oder Zugrichtung (33) des Fahrzeugs (1) und die vorgesehene Einbaulage des Behälters (2). Entsprechendes gilt für die Vorder- und Rückwand des Querkanals (31) und die Form und Erstreckung des Längskanals (32). Alternativ kann ein Ortsbezug auch über die abgewinkelte Vorderwand der K-förmigen Bodenwölbung (27) bzw. des Querkanals (31) hergestellt werden.

Der Behälter (2) weist ein Stützmittel (24) auf, dass zur Aufnahme, Abstützung und ggf. Befestigung des Behälters (2) an einer Fahrzeugachse (12), insbesondere an einem Achskörper (13), vorgesehen und geeignet ist. Der Behälter (2) kann zentral am Achskörper (13) abgestützt werden. Dies kann sich auf den Behälter (2) und/oder den Achskörper (13) beziehen. Das Stützmittel (24) kann unterschiedlich ausgebildet sein.

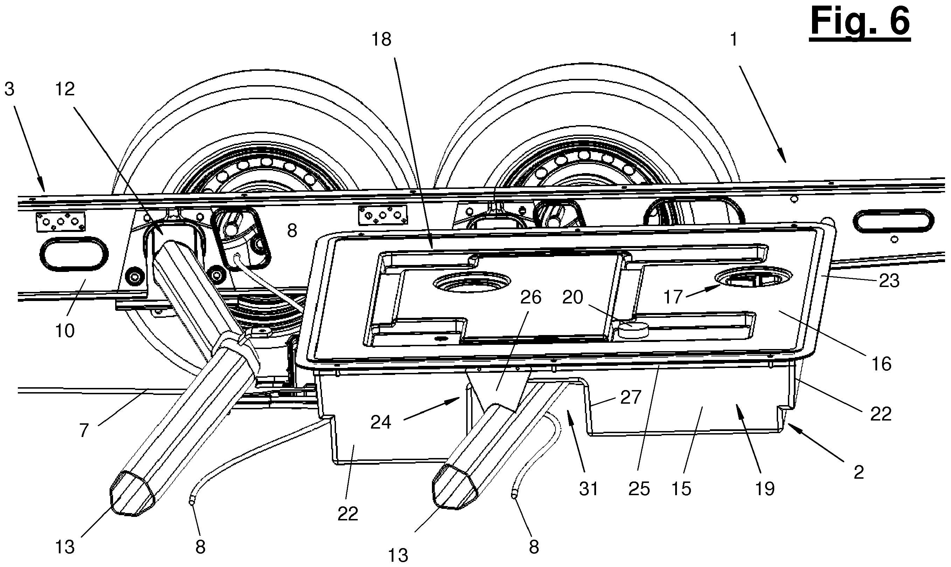

In den gezeigten Ausführungsformen weist es eine Stützschiene (25) und einen hiervon nach unten abstehenden Stützarm (26) auf. Der Stützarm (26) kann sich auf dem Achskörper (13) abstützen. Er kann hierfür an seinem freien Ende eine Kontur aufweisen, die an die Außenform des Achskörpers angepasst ist. Figur 5 und 6 verdeutlichen diese Ausbildung.

Das Stützmittel (24) weist zwei solcher Stützschienen (25) auf, die jeweils an einer äußeren Längsseite des Behälters (2) insbesondere an seinem seitlichen Korpusrand (23), angeordnet und befestigt sind. Die Stützschienen (25) können sich jeweils an der Flanschunterseite befinden. Die Stützschienen übertragen jeweils die vom Stützarm (26) eingeleiteten Stützkräfte und verteilen sie auf den Behälter (2). Der Stützarm (26) ist derart an der Stützschiene (25) angeordnet, dass er von oben in den Mündungsbereich des Querkanals (31) bzw. der quer gerichteten Bodenwölbung (27) ragt. An der Stütz- und Verbindungsstelle kann der Stützarm (26) auch durch Schweißen, mittels einer Laschenverschraubung oder auf andere Weise mit dem Achskörper (13) fest verbunden werden.

Wie Figur 10 verdeutlicht, kann das Stützmittel in der Mitte des Querkanals (31) bzw. im Kreuzungsbereich von Quer- und Längskanal (31,32) einen Stützbeschlag aufweisen. Dieser kann mit dem Achskörper (13) durch Verschrauben oder auf andere Weise fest verbunden werden. Der Stützbeschlag kann auch Teil des Achskörpers (13) sein und mit dem Dach der quer gerichteten Bodenwölbung (27) fest verbunden werden.

Eine Abstützung und/oder Befestigung des Behälters (2) kann alternativ oder zusätzlich auf andere Weise erfolgen. In Figur 7 ist eine solche Befestigung (34) schematisch angedeutet. Eine solche Befestigung (34) bzw. ein Mittel zur Befestigung (34) kann auch bei den anderen Anordnungsvarianten von Figur 1 bis 6 eingesetzt werden.

Der Behälter (2) ist in Figur 7 z.B. an gestrichelt dargestellten Quertraversen abgestützt und befestigt, die ihrerseits am Chassis (3), insbesondere den Längsträgern (10) abgestützt und befestigt sind. Hierbei können z.B. quer zur Längsachse (33) ausgerichtete Stützschienen (25) an oder unter den Querrändern des Korpus (15), insbesondere des abgewinkelten Korpusrands (23), angeordnet sein. Die Quertraversen und ggf. Stützschienen (25) bilden das Mittel zur Befestigung (34).

Ansonsten ist eine beliebige andere Ausbildung und Verbindung der Befestigung (34) mit dem Behälter (2) möglich. Eine Befestigung (34) kann zusätzlich zum vorbeschriebenen Stützmittel (24) vorhanden sein. Der Behälter (2) kann mittels Stützmittel (24) und/oder Befestigung (34) am Chassis (3) abgestützt und befestigt sein, wobei mit einem Fahrzeugaufbau keine Verbindung oder eine beliebige Verbindung, z.B. eine nicht tragende und rein mediale Verbindung, bestehen kann.

Der Behälter (2) weist mehrere separate Kammern (18,19) auf. Im gezeigten Ausführungsbeispiel sind zwei separate Kammern (18,19) vorgesehen, die in Längsrichtung (33) hintereinander angeordnet und voneinander getrennt und gegenseitig abgeschottet sind. Zumindest eine Kammer, z.B. die in Fahrtrichtung (33) hintere Kammer (19) kann als Tank für ein Fluid, insbesondere als Frischwassertank, ausgebildet sein. Die andere Kammer (18) kann dem gleichen oder einem anderen Zweck dienen und entsprechend ausgebildet sein. Sie kann z.B. als Abwassertank ausgebildet sein oder eine Heizung für den Fahrzeugaufbau oder andere Aggregate aufnehmen. Sie kann auch als Stauraum dienen. Die Deckelausbildung ist entsprechend angepasst. Am Boden (21) und/oder einer Seitenwand (22) kann ein Ablauf oder Fluidauslass angeordnet sein.

Die Kammern (18, 19) reichen z.B. über die gesamte Behälterbreite. Die längs gerichteten Bodenwölbungen (28,29,30) können in die Kammern (18, 19) ragen. Die Außenabmessungen der Kammern (18, 19) sind auf den Freiraum (14) einer Tandemachse angepasst und ermöglichen ein dortiges Eintauchen.

Die quer gerichtete Bodenwölbung (27) kann die Kammer (18, 19) in Längsrichtung (33) voneinander trennen und gegenseitig abschotten, insbesondere gegen einen Fluidübertritt.

Die Bodenwölbung (27,28,30) können bis zur Oberseite des Behälters (2) bzw. bis zum Deckel (16) hochragen. Der Deckel (16) kann auf dem umlaufenden Korpusrand (23) aufliegen und geführt sein. Die quer gerichtete Bodenwölbung (27) kann gemäß Figur 4 und 8 auf der Oberseite eine hochragende und an der Deckelunterseite anliegende Stütz- und Dichtleiste aufweisen Wie Figur 6 in einer perspektivischen Draufsicht bei geschlossenem Deckel (16) und Figur 8 in einer anderen perspektivischen Draufsicht mit einem transparenten Deckel zeigen, kann der Deckel (16) im Bereich des Tanks bzw. der Kammer (19) eine Armatur (17) aufweisen. Die Armatur (17) kann z.B. aus einem Drehverschluss und Dichtungsanschlüsse für Leitungen aus dem Fahrzeugaufbau ausgebildet sein. Am Deckel (16) kann ferner ein Sensor (20), z.B. ein Füllstandsensor, angeordnet sein.

Der Behälter (2) besteht in den gezeigten Ausführungsformen aus einem Kunststoff und ist z.B. als Twin-Sheet-Teil ausgebildet. Er kann alternativ aus einem anderen Material, z.B. einem Metall, insbesondere einer Leichtmetalllegierung, oder auch aus einem Verbundmaterial bestehen. Der Behälter (2) kann außerdem zumindest bereichsweise aus einem antibakteriellen Material bestehen. Hierfür kann das Wandmaterial des Behälters (2) entsprechend ausgebildet sein, wobei es z.B. Silberionen oder andere antibakterielle Stoffe enthält. Ferner ist eine Beschichtung der Behälterinnenseite mit einem antibakteriellen Material möglich. Das antibakterielle Material kann nur bereichsweise, z.B. in einem Tankbereich für Frischwasser, z.B. im Bereich der Kammer (19), vorhanden sein.

Der Behälter (2) kann montagefertig vorkonfektioniert bereit gestellt werden. Er kann an einen Kunden, z.B. einen Fahrzeughersteller, aber auch an einen Fahrzeugnutzer zur Erstausrüstung, Nachrüstung oder Umrüstung geliefert werden. Der Behälter (2) kann bei der Vorkonfektionierung montagefertig vorbereitet werden. Er kann dabei die kundenseitig gewünschten Anschlüsse, evtl. Einbauten, Stützmittel (24) und evtl. Mittel zur Befestigung (34) erhalten. Er kann dann vom Kunden ohne weiteren signifikanten Aufwand am Fahrzeug (1) montiert werden.

Abwandlungen der gezeigten und beschriebenen Ausführungsformen sind in verschiedener Weise möglich. Insbesondere können die Einzelmerkmale der vorbeschriebenen Ausführungsformen und der genannten Abwandlungen beliebig miteinander kombiniert und insbesondere auch vertauscht werden.

Das Fahrzeug (1) kann alternativ als Kraftfahrzeug ausgebildet sein, das einen Zugkopf und ein Chassis (3) mit einer oder mehreren, bevorzugt nicht angetriebenen Fahrzeugachsen (12) aufweist. Der Zugkopf hat in dieser Variante einen Frontantrieb. Alternativ ist bei entsprechender Behälteranpassung auch ein Heckantrieb möglich. Ferner ist ein Einsatz und eine Anpassung des Behälters (2) an eine Anordnung von drei oder mehr Fahrzeugachsen (12), eine sogenannte Tripleachse, möglich. Die Bodenprofilierung mit den Quer- und Längskanälen (31, 32) und die Bodenwölbungen (27,28,29,30) wird hierfür entsprechend angepasst.

### BEZUGSZEICHENLISTE

- 1: Fahrzeug, Fahrzeuganhänger
- 2: Behälter
- 3: Fahrgestell, Chassis
- 4: Deichsel
- 5: Anhängerkupplung
- 6: Bremseinrichtung
- 7: Bremsgestänge
- 8: Bremszug
- 9: Schlingerbremseinheit
- 10: Längsträger
- 11: Querträger
- 12: Fahrzeugsachse, Schräglenkerachse
- 13: Achskörper
- 14: Freiraum
- 15: Korpus
- 16: Deckel
- 17: Armatur
- 18: Kammer
- 19: Kammer
- 20: Sensor
- 21: Boden
- 22: Seitenwand
- 23: Korpusrand, Flansch
- 24: Stützmittel
- 25: Stützschiene
- 26: Stützarm
- 27: Bodenwölbung quer
- 28: Bodenwölbung längs breit
- 29: Bodenwölbung längs schmal
- 30: Bodenwölbung längs breit
- 31: Querkanal
- 32: Längskanal
- 33: Zugrichtung, Fahrtrichtung
- 34: Befestigung

## Patentansprüche

1. Behälter für ein Fahrzeug (1), insbesondere einen Fahrzeuganhänger, wobei der Behälter (2) einen schalenförmigen Korpus (15) mit einem bevorzugt geschlossenen Boden (21) aufweist, **dadurch gekennzeichnet, dass** der profilierte Boden (21) quer zueinander ausgerichtete, einbauchende Bodenwölbungen (27,28,29,30) aufweist, die zueinander kreuzweise ausgerichtete und bevorzugt einander kreuzende Quer- und Längskanäle (31, 32) bilden, wobei der Behälter (2) mehrere, insbesondere zwei, separate Kammern (18,19) aufweist.

2. Behälter nach Anspruch 1, **dadurch gekennzeichnet, dass** der Boden (21) mit den einzeln oder mehrfach vorhandenen Quer- und Längskanälen (31,32) eine Form aufweist, die zur Aufnahme von Fahrzeugteilen, insbesondere eines Achskörpers (13) einer Fahrzeugachse (12) und/oder eines Teils einer Bremseinrichtung (6) des Fahrzeugs (1), insbesondere einer Schlingerbremseinheit (9), adaptiert ist.

3. Behälter nach Anspruch 1 oder 2, **dadurch gekennzeichnet, dass** der Behälter (2) einen festen oder abnehmbaren, einteiligen oder mehrteiligen Deckel (16) aufweist.

4. Behälter nach einem der vorhergeenden Ansprüche, **dadurch gekennzeichnet, dass** der Behälter (2) ein Stützmittel (24) aufweist, das zur Aufnahme und Abstützung des Behälter (2) an einer Fahrzeugachse (12), insbesondere einem Achskörper (13), vorgesehen und geeignet ist.

5. Behälter nach einem der vorhergeenden Ansprüche, **dadurch gekennzeichnet, dass** der Behälter (2) aus einem antibakteriellen Material besteht.

6. Behälter nach einem der vorhergehenden Ansprüche, **dadurch gekennzeichnet, dass** der Querkanal (31) und der Längskanal (32) einander schneiden unter Bildung von Kanalöffnungen an der Schnittstelle, wobei der Querkanal (31) sich über die gesamte Breite des Behälters (2) erstreckt und an den Stirnseiten offen ist.

7. Behälter nach einem der vorhergehenden Ansprüche, **dadurch gekennzeichnet, dass** der Längskanal (32) sich von der Vorderseite des Behälters (2) durch den Querkanal (31) hindurch und ein Stück darüber hinaus erstreckt, wobei der Längskanal (32) mit Abstand vor der Rückseite des Behälters (2) endet und eine offene sowie eine geschlossene Stirnseite hat.

8. Behälter nach einem der vorhergehenden Ansprüche, **dadurch gekennzeichnet, dass** eine Bodenwölbung (27,28,29,39), insbesondere eine quer gerichtete Bodenwölbung (27), benachbarte Kammern (18, 19) voneinander trennt und abschottet.

9. Behälter nach einem der vorhergehenden Ansprüche, **dadurch gekennzeichnet, dass** der Behälter (2) zur Montage im Innenbereich eines Chassis (3) des Fahrzeugs (1) vorgesehen und ausgebildet ist, wobei der Behälter (2) eine an Längsträger (10) des Chassis (3) angepasste Höhe aufweist.

10. Behälter nach einem der vorhergehenden Ansprüche, **dadurch gekennzeichnet, dass** der Behälter (2) aus Kunststoff besteht, insbesondere als Twin sheet Teil aus Kunststoff, ausgebildet ist.

11. Fahrzeug, insbesondere Fahrzeuganhänger, mit einem Behälter (2), der einen schalenförmigen Korpus (15) mit einem bevorzugt geschlossenen Boden (21) aufweist, **dadurch gekennzeichnet, dass** der Behälter (2) nach einem der Ansprüche 1 bis 10 ausgebildet ist.

12. Fahrzeug nach Anspruch 11, **dadurch gekennzeichnet, dass** das Fahrzeug (1) ein Chassis (3) und eine oder mehrere, insbesondere zwei, Fahrzeugachsen (12) mit Achskörper(n) (13), insbesondere Schräglenkerachse(n), aufweist.

13. Fahrzeug nach Anspruch 12, **dadurch gekennzeichnet, dass** der Behälter (2) im Innenbereich des Chassis (3), insbesondere im Bereich der Fahrzeugachse(n) (12), angeordnet ist.

14. Fahrzeug nach Anspruch 12 oder 13, **dadurch gekennzeichnet, dass** der Behälter (2) mit seinem Deckel (16) auf Höhe der Oberkante des Chassis (3) angeordnet ist.

15. Verfahren zur Bereitstellung eines montagefertig vorkonfektionierten Behälters (2) für ein Fahrzeug (1), insbesondere einen Fahrzeuganhänger, wobei der Behälter (2) einen schalenförmigen Korpus (15) mit einem bevorzugt geschlossenen Boden (21) aufweist, **dadurch gekennzeichnet, dass** der profilierte Boden (21) quer zueinander ausgerichtete, einbauchende Bodenwölbungen (27,28,29,30) aufweist, die zueinander kreuzweise ausgerichtete und bevorzugt einander kreuzende Quer- und Längskanäle (31,32) bilden, wobei der Behälter (2) mehrere, insbesondere zwei, separate Kammern (18, 19) aufweist und bei der Vorkonfektionierung montagefertig vorbereitet wird, wobei er die kundenseitig gewünschten Anschlüsse, evtl. Einbauten, Stützmittel (24) und evtl. Mittel zur Befestigung (34) erhält.
